# FASCICULE DE BREVET EUROPEEN

(11) **EP 2 914 399 B1**
(45) Date de publication et mention de la délivrance du brevet: **02.03.2022**
(21) Numéro de dépôt: 13801624.1
(22) Date de dépôt: 29.10.2013
(51) Int. Cl.: B24B 13/005, B29D 11/00

(54) **PROCÉDÉ DE FABRICATION DE LENTILLES OPTIQUES ET ENSEMBLE POUR LA FABRICATION DE TELLES LENTILLES**
VERFAHREN ZUR HERSTELLUNG VON KONTAKTLINSEN UND ANORDNUNG ZUR HERSTELLUNG DIESER LINSEN
METHOD FOR MANUFACTURING OPTICAL LENSES AND ASSEMBLY FOR MANUFACTURING SUCH LENSES

(30) Priorité: 30.10.2012 FR 1260370
(43) Date de publication de la demande: 09.09.2015
(73) Titulaire: Essilor International, 94220 Charenton-le-Pont (FR)
(72) Inventeur: CASTRO, Luis, F-94220 Charenton-le-Pont (FR); GACOIN, Eric, F-94220 Charenton-le-Pont (FR); MOINE, Jérôme, F-94220 Charenton-le-Pont (FR); PONS, Bernard, F-94220 Charenton-le-Pont (FR)
(74) Mandataire: Santarelli
(86) Numéro de dépôt international: PCT/FR2013/052590
(87) Numéro de publication internationale: WO 2014/068247

(56) Documents cités:
- WO-A1-99/67053
- DE-A1- 10 310 561
- DE-A1-102007 040 395
- GB-A- 2 084 493

## Description

L'invention concerne le domaine de la fabrication des lentilles optiques.

L'invention concerne plus particulièrement les procédés de fabrication de telles lentilles présentant une première face et une deuxième face opposée à la première face, comportant une étape de positionnement de la deuxième face par rapport à la première face, pour l'usinage de cette deuxième face.

L'invention concerne en outre les ensembles utilisés pour la fabrication de telles lentilles.

On connaît déjà de la demande de brevet européen EP 2 199 021 de tels procédés de fabrication, comportant une étape de fourniture d'un palet, aussi appelé semi-fini, ayant une face convexe préformée et une face concave à usiner.

La première face, ou ici face avant, de la lentille est formée par la face du palet ayant une forme convexe, et la deuxième face, ou ici face arrière, de la lentille est formée par la face du palet ayant une forme concave.

La fabrication d'une telle lentille comporte typiquement des étapes au cours desquelles le palet reçoit sur sa surface des marquages.

Par exemple, il peut s'agir de points ou de croix identifiant un point particulier (par exemple le centre optique de la lentille ou le point de référence de prisme pour un verre progressif), des traits d'axes (par exemple pour indiquer l'axe horizontal selon lequel l'astigmatisme est corrigé), les formes délimitant une zone particulière (par exemple, zone de vision de près ou zone de vision de loin dans le cas des lentilles optiques progressives). De même, il peut être nécessaire d'effectuer des marquages relatifs à l'identification de la lentille ou autres marquages commerciaux.

Ces marquages sont généralement réalisés par des microgravures ou par des marquages imprimés, dits marquages temporaires.

Le palet ainsi marqué est ensuite monté sur une bague dite de support.

Cette bague est annulaire et comporte sur un bord supérieur plusieurs repères visuels de contrôle.

L'opérateur peut ainsi effectuer un contrôle visuel grossier de la position du palet sur la bague en comparant les positions des marquages sur le palet et des repères visuels sur la bague. Si cela est nécessaire, l'opérateur peut modifier la position du palet sur la bague en le déplaçant en translation selon trois directions relatives à trois axes d'un repère orthonormal basique, et en rotation suivant également trois directions définies autour respectivement de chacun des trois axes.

Le palet est ensuite assujetti à cette bague ainsi qu'à un pion de blocage par l'intermédiaire d'un matériau liant, ici un métal dit fusible, s'étendant de la face avant du palet jusqu'à ce pion de blocage.

La bague est ainsi interposée entre le palet et le pion de blocage.

Le pion de blocage, ensemble avec la bague et le palet, est monté sur un appareil de blocage et de contrôle, lequel appareil comporte un dispositif de visualisation, autrement dit une caméra, configuré pour visualiser à la fois les repères de contrôle de la bague et les marquages sur le palet.

L'appareil détermine ainsi une première position du palet par rapport à la bague, et plus précisément de la face convexe du palet ayant les marquages, puis détermine une erreur de positionnement en comparant cette première position à une position prédéterminée du palet par rapport à la bague.

La première position du palet correspond à la position réelle de la face convexe du palet par rapport à la bague et l'erreur de positionnement est représentative des corrections qu'il est nécessaire d'apporter à un fichier de surface de la face concave. Ce fichier de surface est un fichier d'usinage de la face concave du palet, lequel fichier est chargé dans une machine d'usinage pour l'usinage de cette face concave.

L'appareil de blocage et de contrôle envoie donc cette erreur de positionnement et/ou ces corrections de coordonnées à la machine d'usinage configurée pour usiner la face concave du palet, sur la base du fichier de surface corrigé, pour former la face avant de la lentille optique.

La demande de brevet GB 2 084 493, sur laquelle le préambule des revendications 1 et 10 est basé, décrit un procédé et un
appareil de fabrication de verres de lunettes à partir d'un palet semi-fini. Le palet est pourvu d'une entaille ménagée sur sa tranche. L'appareil comporte une bague de maintien pourvue d'un pion saillant dans un espace interne à la bague et d'un joint au fond de la bague. Le palet est monté sur la bague, avec sa face finie qui est tournée du côté du fond de la bague. L'entaille du palet coopère avec le pion de la bague et la face finie du palet repose partiellement sur le joint de la bague. Le palet semi-fini est maintenu dans la bague par un système d'aspiration, la face non finie du palet étant accessible pour être usinée.

L'invention vise à fournir un procédé de fabrication de lentilles optiques, comportant une étape de positionnement de la face arrière par rapport à la face avant de cette lentille qui permette de limiter les erreurs de positionnement, voire de les supprimer presque totalement, et qui soit simple, commode et économique.

L'invention a ainsi pour objet, sous un premier aspect, un procédé selon la revendication 1.

Le procédé selon l'invention offre l'avantage de simplifier l'étape de positionnement de la deuxième face par rapport à la première face de la lentille en vue de l'usinage de cette deuxième face tout en améliorant les performances de ce positionnement par l'élimination presque totale, voire totale, des éventuelles erreurs de positionnement.

L'étape de positionnement est en effet facilitée grâce aux configurations du palet et de la bague, et plus précisément grâce aux premier et deuxième repères mécaniques de positionnement sur ce palet et aux premier et second repères mécaniques complémentaires de contrôle sur cette bague.

Le premier groupe formé des premiers repères mécaniques de positionnement et de contrôle, autrement dit la tranche globalement circulaire et le contour interne globalement circulaire et concentrique avec cette tranche, permet de positionner de manière sûre le palet sur la bague, c'est-à-dire sans nécessité de vérification postérieure (que ce soit par l'œil d'un opérateur ou par une caméra). Ce palet est positionné selon deux directions de translation correspondant à deux des axes d'un repère orthonormal basique, à savoir les directions Tx et Ty qui se trouvent ici dans un même premier plan dit horizontal, ainsi que selon deux directions de rotation définies respectivement autour des directions de translation ci-dessus, à savoir Rx et Ry.

Le deuxième groupe formé des deuxièmes repères mécaniques de positionnement et de contrôle, autrement dit la ou les portion(s) en rampe et l'épaulement, permet de positionner de manière sûre le palet sur la bague, c'est-à-dire sans nécessité de vérification postérieure (que ce soit par l'œil d'un opérateur ou par une caméra). Le palet est positionné essentiellement selon une autre direction de translation correspondant au troisième axe du repère orthonormal basique, à savoir la direction Tz qui se trouve ici dans un deuxième plan dit vertical, mais aussi selon les deux directions de translation Tx et Ty.

Une fois emboîté au moins partiellement sur la bague, le palet est donc en position, dite définitive, au moins selon les directions de translation Tx, Ty et Tz et selon les directions de rotation Rx et Ry, pour l'usinage de la deuxième face de la lentille. Le positionnement du palet sur la bague est ici indépendant de la géométrie de la face supérieure de ce dernier.

Contrairement aux repères visuels de contrôle de la bague utilisée dans le procédé de l'art antérieur, les premier et second repères mécaniques de contrôle de la bague utilisée dans le procédé selon l'invention n'ont pas un rôle essentiel d'aide au contrôle visuel par un opérateur ou par un dispositif de visualisation. En effet, ces premier et second repères mécaniques de contrôle sur cette bague correspondent plutôt à des repères de positionnement complémentaires en ce sens qu'ils ont chacun un rôle pratique pour et lors de l'emboîtement partiel du palet sur la bague.

On notera que puisque l'étape de positionnement est préalable à l'usinage de la face inférieure du palet pour former la deuxième face de la lentille, c'est plus précisément la face inférieure du palet qui est positionnée par rapport à la première face (puisqu'en général la face supérieure du palet a déjà été transformée, par exemple par usinage, pour former la première face de la lentille).

Selon des caractéristiques préférées, simples, commodes et économiques du procédé selon l'invention, ledit palet comporte en outre un troisième repère mécanique de positionnement au niveau de ladite tranche globalement circulaire, par exemple un méplat, et ladite bague de positionnement comporte un troisième repère complémentaire de contrôle au niveau dudit contour interne, par exemple une portion droite, avec ledit troisième repère mécanique de positionnement et ledit troisième repère mécanique de contrôle qui sont configurés pour immobiliser ledit palet en rotation autour d'un axe traversant lesdites faces supérieure et inférieure dudit palet, par rapport à ladite bague, lorsque ledit palet est monté sur ladite bague.

Le troisième groupe formé des troisième repères mécaniques de positionnement et de contrôle, par exemple le méplat et la portion droite, permet de positionner de manière sûre le palet sur la bague, c'est-à-dire sans nécessité de vérification postérieure (que ce soit par l'œil d'un opérateur ou par une caméra). Le palet est positionné selon une autre direction de rotation définie autour de la direction de translation Tz, à savoir Rz.

Une fois emboîté au moins partiellement sur la bague, le palet est donc en position, dite définitive, selon toutes les directions de translation Tx, Ty et Tz et de rotation Rx, Ry et Rz, sans nécessité de contrôle de cette position, pour l'usinage de la deuxième face de la lentille.

Selon des caractéristiques préférées, simples, commodes et économiques du procédé selon l'invention, ledit palet comporte en outre un troisième repère mécanique ou visuel de positionnement au niveau de ladite tranche globalement circulaire ou de la périphérie de ladite face supérieure ; et ledit procédé comporte en outre une étape de contrôle visuel ou mécanique de la position angulaire dudit palet par rapport à ladite bague, laquelle position angulaire est prise par rapport à un axe traversant lesdites faces supérieure et inférieure dudit palet, lorsque ledit palet est monté sur ladite bague ; ainsi qu'une étape de détermination d'une éventuelle erreur de position angulaire.

Ici, afin de s'assurer de la position définitive correcte du palet par rapport à la bague, uniquement selon l'autre direction de rotation définie autour de la direction de translation Tz, à savoir Rz, une étape de contrôle visuel ou mécanique de la position angulaire du palet est requise. Cette étape de contrôle visuel ou mécanique peut être réalisée par un palpeur mécanique ou par l'œil d'un opérateur ou encore par un dispositif de visualisation.

Selon des caractéristiques préférées, simples, commodes et économiques du procédé selon l'invention :
- le procédé comporte en outre l'étape d'usiner ladite face inférieure dudit palet pour former ladite deuxième face de ladite lentille optique ;
- le procédé comporte en outre les étapes de détourer ledit palet à un diamètre prédéterminé, polir ladite deuxième face préalablement usinée, graver ladite deuxième face préalablement usinée ;
- l'étape de filmer ladite face supérieure dudit palet avant ladite étape de monter ledit palet sur ladite bague de positionnement.
- ladite bague de positionnement comporte en outre une encoche d'injection débouchant dans ladite cavité et ladite étape de bloquer en position ledit palet sur ledit pion de blocage et de maintien comporte l'étape d'injecter un matériau liant, par exemple du métal, dans ladite encoche d'injection ;
- ladite étape de fournir ledit palet comporte l'étape d'usiner ledit troisième repère mécanique de positionnement dudit palet au niveau dudit contour dudit palet ; et/ou
- ladite étape de fournir ledit palet comporte en outre une étape d'usiner ladite face supérieure dudit palet pour former ladite face supérieure de ladite lentille optique.

L'invention a aussi pour objet, sous un second aspect, un ensemble selon la revendication 10.

L'ensemble selon l'invention offre l'avantage de simplifier le positionnement de la deuxième face par rapport à la première face de la lentille en vue de l'usinage de cette deuxième face tout en améliorant les performances de ce positionnement par l'élimination presque totale, voire totale, des éventuelles erreurs de positionnement.

Le positionnement est en effet facilité grâce aux configurations du palet et de la bague, et plus précisément grâce aux premier et deuxième repères mécaniques de positionnement sur ce palet et aux premier et second repères mécaniques de contrôle sur cette bague.

Le premier groupe formé des premiers repères mécaniques de positionnement et de contrôle, autrement dit la tranche globalement circulaire et le contour interne globalement circulaire et concentrique avec cette tranche, permet de positionner de manière sûre le palet sur la bague, c'est-à-dire sans nécessité de vérification postérieure (que ce soit par l'œil d'un opérateur ou par une caméra). Le palet est positionné selon deux directions de translation correspondant à deux des axes d'un repère orthonormal basique, à savoir les directions Tx et Ty qui se trouvent ici dans un même plan dit horizontal, ainsi que selon deux directions de rotation définies respectivement autour des directions de translation ci-dessus, à savoir Rx et Ry.

Le deuxième groupe formé des deuxièmes repères mécaniques de positionnement et de contrôle, autrement dit la ou les portion(s) en rampe et l'arête définie par l'épaulement, permet de positionner de manière sûre le palet sur la bague, c'est-à-dire sans nécessité de vérification postérieure (que ce soit par l'œil d'un opérateur ou par une caméra). Le palet est positionné essentiellement selon une autre direction de translation correspondant au troisième axe du repère orthonormal basique, à savoir la direction Tz qui se trouve ici dans un plan dit vertical, mais aussi selon les deux directions de translation Tx et Ty.

Une fois emboîté au moins partiellement sur la bague, le palet est donc en position, dite définitive, au moins selon les directions de translation Tx, Ty et Tz et selon directions de rotation Rx et Ry, pour l'usinage de la deuxième face de la lentille. Le positionnement du palet sur la bague est ici indépendant de la géométrie de la face supérieure de ce dernier.

Contrairement aux repères visuels de contrôle de la bague utilisée dans le procédé de l'art antérieur, les premier et second repères mécaniques de contrôle de la bague de l'ensemble selon l'invention n'ont pas un rôle essentiel d'aide au contrôle visuel par un opérateur ou par un dispositif de visualisation. En effet, ces premier et second repères mécaniques de contrôle sur cette bague correspondent plutôt à des repères de positionnement complémentaires en ce sens qu'ils ont chacun un rôle pratique à l'emboîtement partiel du palet sur la bague.

On notera que puisque le positionnement est préalable à l'usinage de la face inférieure du palet pour former la deuxième face de la lentille, c'est plus précisément la face inférieure du palet qui est positionnée par rapport à la première face (puisqu'en général la face supérieure du palet a déjà été transformée, par exemple par usinage, pour former la première face de la lentille).

Selon des caractéristiques préférées, simples, commodes et économiques de l'ensemble selon l'invention :
- ledit palet comporte en outre un troisième repère mécanique de positionnement au niveau de ladite tranche globalement circulaire, par exemple un méplat, et ladite bague de positionnement comporte un troisième repère mécanique de contrôle au niveau dudit contour interne, par exemple une portion droite, avec ledit troisième repère mécanique de positionnement et ledit troisième repère mécanique de contrôle qui sont configurés pour immobiliser ledit palet en rotation autour d'un axe traversant lesdites faces supérieure et inférieure dudit palet, par rapport à ladite bague, lorsque ledit palet est emboîté partiellement sur ladite bague ; de sorte que le troisième groupe formé des troisièmes repères mécaniques de positionnement et de contrôle, par exemple le méplat et la portion droite, permet de positionner de manière sûre, c'est-à-dire sans nécessité de vérification postérieure (que ce soit par l'œil d'un opérateur ou par une caméra), le palet sur la bague, selon une autre direction de rotation définie autour de la direction de translation Tz, à savoir Rz ;
- ledit troisième repère mécanique de positionnement est ménagé parallèlement à un axe nasal-temporal dudit palet pour former ladite lentille optique ;
- ladite bague de positionnement comporte en outre une encoche d'injection débouchant dans ladite cavité et ledit ensemble comporte en outre un pion de blocage et de maintien sur lequel ledit palet est configuré pour être bloqué en position grâce à un matériau liant injecté à travers ladite encoche d'injection, ladite bague de positionnement étant alors interposée entre ledit palet et ledit pion de blocage et de maintien ; et/ou
- ladite bague comporte une pluralité de blocs de guidage régulièrement disposés autour de ladite cavité et définissant ledit contour interne.

Selon d'autres caractéristiques préférées, simples, commodes et économiques de l'ensemble selon l'invention ladite au moins une portion en rampe dudit palet présente un angle d'inclinaison par rapport à ladite tranche dudit palet, lequel angle d'inclinaison est déterminé de sorte à augmenter le contact entre ledit palet et ladite bague de positionnement en fonction d'au moins une contrainte prédéterminée.

Selon d'autres caractéristiques préférées, simples, commodes et économiques de l'ensemble selon l'invention :
- ledit angle d'inclinaison de ladite au moins une portion en rampe est déterminé en fonction d'une caractéristique représentative d'un périmètre de contact entre ladite au moins une portion en rampe dudit palet et ledit épaulement de ladite bague pour assurer la stabilité dudit palet dans ladite bague ; et/ou
- ledit angle d'inclinaison de ladite au moins une portion en rampe est déterminé en fonction d'une caractéristique représentative d'une zone optiquement utile de ladite lentille optique pour assurer une ouverture prédéterminée de ladite lentille optique.

La zone optiquement utile est la zone de la lentille optique qui comporte les caractéristiques optiques liées à la prescription du porteur. Il s'agit généralement d'une zone de la lentille qui se trouve dans une monture de lunettes lorsque cette lentille est taillée à la forme de la monture et est montée dans cette dernière.

L'ouverture de la lentille optique est représentative de la taille de la zone optiquement utile.

On va maintenant poursuivre l'exposé de l'invention par la description d'un exemple de réalisation, donnée ci-après à titre illustratif et non limitatif, en référence aux dessins annexés sur lesquels :
- la figure 1 représente schématiquement une étape du procédé de fabrication d'une lentille optique, conforme à l'invention, ici l'usinage de la face supérieure et de la périphérie d'un palet, pour former la première face de la lentille ;
- la figure 2 représente schématiquement une autre étape du procédé de fabrication de la lentille optique, ici le montage et le blocage du palet sur une bague de positionnement pour positionner la face inférieure du palet par rapport à la première face ;
- la figure 3 représente schématiquement encore une autre étape du procédé de fabrication d'une lentille, ici l'usinage de la face inférieure du palet, de manière à former la deuxième face de la lentille optique ;
- la figure 4 est une vue en perspective du palet, après l'étape d'usinage illustrée sur la figure 1 ;
- la figure 5 représente schématiquement, en vue de dessus, le palet dans la bague de positionnement, comme illustré sur la figure 2 ;
- les figures 6 et 7 sont des vues en perspective, respectivement de la bague de positionnement prise isolément et de cette bague dans laquelle est monté le palet, comme illustré sur la figure 2 ;
- la figure 8 est une vue en coupe partielle et schématique repérée VIII-VIII sur la figure 7 ;
- la figure 9 est un schéma-blocs illustrant différentes étapes de fonctionnement du procédé de fabrication de la lentille optique, comportant notamment l'étape illustrée sur la figure 1 ;
- la figure 10 est un schéma-blocs illustrant en détail une des étapes visibles sur la figure 9, à savoir l'usinage de repères mécaniques sur le palet ;
- la figure 11 est un schéma-blocs illustrant d'autres étapes de fonctionnement du procédé de fabrication de la lentille optique, comportant notamment les étapes illustrées sur les figures 2 et 3 ; et
- les figures 12 à 15 montrent chacune le palet des figures 2 et 3, en vues de face et de dessus, selon plusieurs variantes de réalisation d'une portion en rampe qu'il comporte.

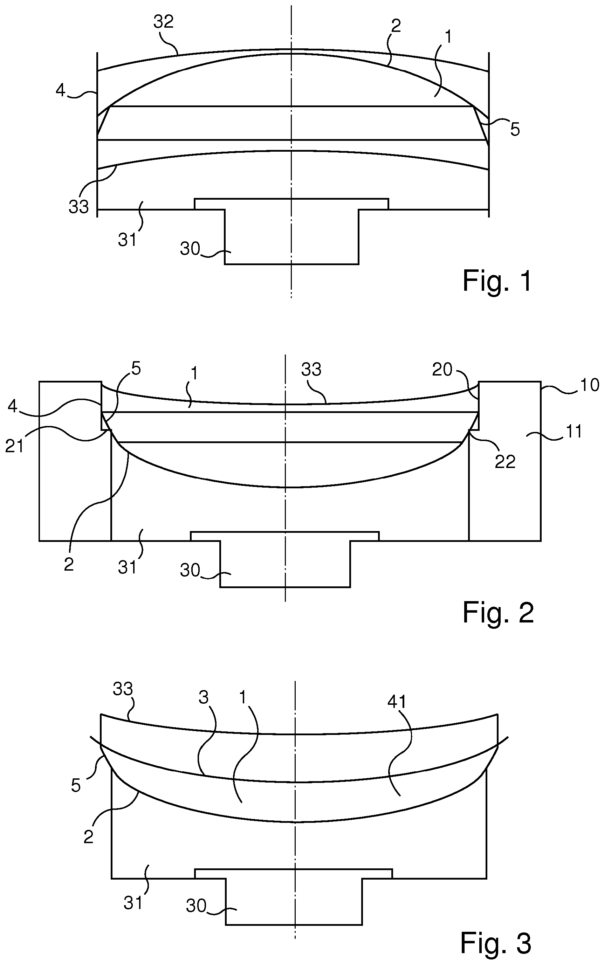

Les figures 1 et 3 illustrent différentes étapes de fonctionnement d'un procédé de fabrication d'une lentille optique 1.

Ici, la lentille optique 1 est du type ophtalmique et configurée pour former un verre de lunettes prévu pour être monté sur une paire de lunettes.

Cette lentille optique présente une première face correspondant ici à une face avant 2 qui a une forme convexe ainsi qu'une deuxième face correspondant ici à une face arrière 3 qui a une forme concave. Cette face arrière 3 peut présenter une surface complexe, appelée "free form surfacing" ou "digital surfacing" en anglais, nécessitant un usinage et plus précisément un surfaçage, particulièrement précis et difficile notamment du fait des grandes variations d'altitude, combinées par exemple avec un tore et une progression, sur cette surface.

Il est nécessaire de positionner correctement la lentille optique 1, et plus précisément sa face arrière 3 (pas encore usinée) par rapport à sa face avant 2 (déjà usinée) de manière à réaliser la face arrière 3 de la lentille optique 1 conformément à la prescription ophtalmique souhaitée.

La lentille optique est formée à partir d'un palet, également référencé 1, comportant un corps plein généralement moulé en matière plastique.

Ce palet 1, à l'état brut, aussi appelé premier semi-fini, présente une face supérieure correspondant ici à une face convexe 32 et une face inférieure correspondant ici à une face concave 33, chacune étant destinée à former respectivement la face avant 2 et la face arrière 3 de la lentille.

La figure 1 illustre l'usinage de la face convexe 32, dite aussi face avant, du palet 1 ainsi que l'usinage de repères mécaniques de positionnement sur ce palet 1.

La figure 2 illustre le positionnement du palet 1 dans une bague de positionnement 10, postérieurement aux étapes d'usinage illustrées sur la figure 1.

La figure 3 illustre quant à elle l'usinage de la face concave 33 du palet 1.

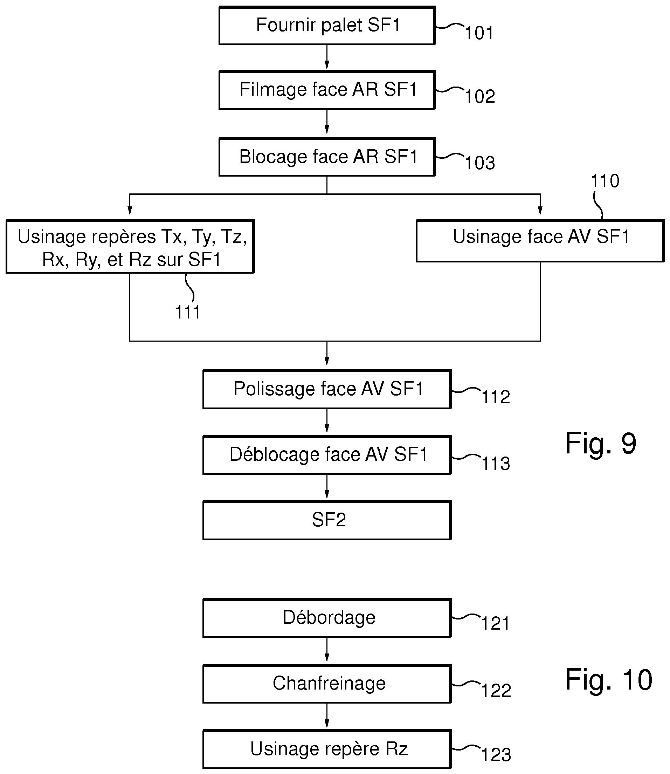

On décrira ci-après plus en détail le procédé de fabrication de la lentille optique à partir du palet en référence aux figures 9 à 11 qui illustrent différentes étapes de fonctionnement de ce procédé de fabrication et en référence aux figures 1 à 3 qui illustrent concrètement la mise en œuvre de certaines de ces étapes.

On va maintenant décrire plus en détail le palet 1 qui permet de former la lentille optique, la bague de positionnement 10 et la coopération entre ce palet 1 et cette bague 10.

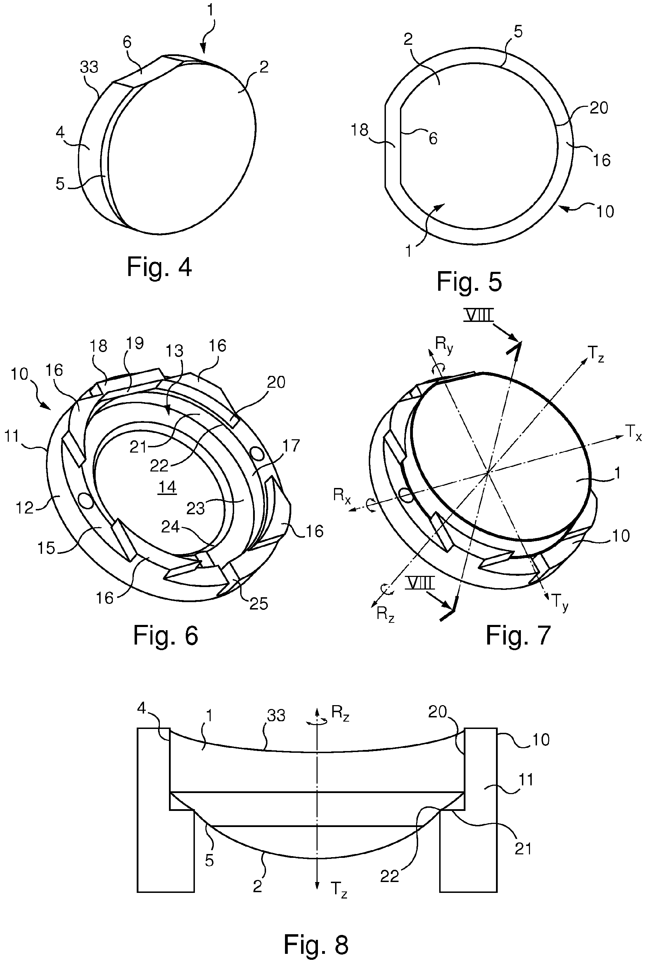

La figure 4 illustre le palet 1 tel que visible sur la figure 2, autrement dit après l'usinage de sa face convexe 32 et des repères mécaniques de positionnement.

Le palet 1 comporte ici, à l'opposé de sa face concave 33, la face avant 2 de la lentille optique.

Le palet 1 comporte en outre une tranche 4 qui est globalement circulaire, un méplat 6 qui est ménagé sur une portion de cette tranche 4 ainsi qu'un chanfrein 5 formant une portion en rampe, ici biseautée, et globalement circulaire. Ce chanfrein 5 est ménagé entre la tranche 4 et la face avant 2.

Ici, le chanfrein 5 présente une pente, ou angle d'inclinaison par rapport à la tranche 4 du palet 1, comprise entre environ 20° et environ 45°.

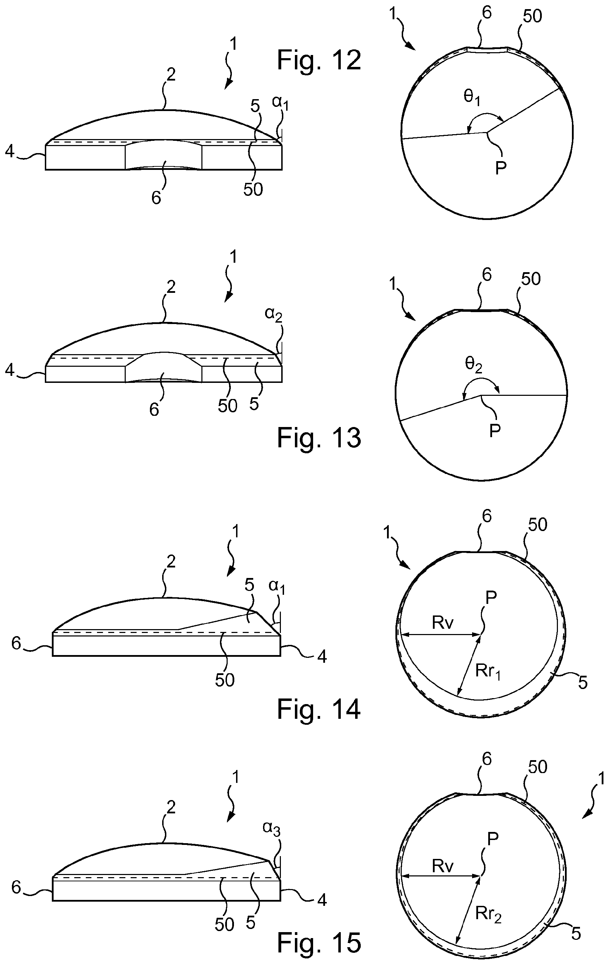

Cet angle d'inclinaison est déterminé de sorte à augmenter le contact entre le palet 1 et la bague de positionnement 10 en fonction d'au moins une contrainte prédéterminée (voir ci-après en référence aux figures 12 à 15).Le palet 1 ainsi usiné forme ce qu'on appelle un second semi-fini. Le premier semi-fini est le palet 1 à son état brut, comme indiqué plus haut.

La tranche 4 globalement circulaire forme un premier repère mécanique de positionnement, le chanfrein 5 forme un deuxième repère mécanique de positionnement et le méplat 6 forme un troisième repère mécanique de positionnement, pour positionner le palet 1, en tant que deuxième semi-fini, dans la bague de positionnement 10.

La figure 6 illustre la bague de positionnement 10 prise isolément.

Cette bague 10, qui présente une forme globalement cylindrique, comporte un corps 11, ici en aluminium, pourvu d'une paroi latérale cylindrique 12, d'un bord supérieur 15 et d'une cavité 13 débouchant de part et d'autre de la bague 10.

Cette bague 10 comporte en outre quatre blocs de guidage 16 en saillie du bord supérieur 15, lesquels blocs de guidage 16 sont configurés pour former un contour interne 20 à la bague 10 qui soit globalement circulaire.

Les blocs de guidage 16 sont régulièrement répartis le long du bord supérieur 15.

La bague 10 comporte également un épaulement 21 globalement circulaire définissant une arête elle-même globalement circulaire, lequel épaulement 21 est ménagé entre le bord supérieur 15 et une paroi de fond 23.

Cette paroi de fond 23 est pourvue d'une ouverture centrale 14 débouchant hors de la bague 10 et d'une portion biseautée 24 ménagée entre cette ouverture 14 et la paroi de fond 23.

La bague 10 comporte en outre un autre bloc de guidage 18 différent des blocs de guidage 16 en ce que cet autre bloc 18 présente une portion droite 19 du côté de la cavité 13 et donc au niveau du contour interne 20 globalement circulaire.

Cet autre bloc 18 est ménagé entre deux blocs de guidage 16.

La bague 10 comporte en outre une encoche d'injection 25 ménagée au travers du corps 11 et débouchant dans la cavité 13, jusqu'à l'orifice 14.

Le contour interne globalement circulaire 20 forme un premier repère complémentaire de contrôle, l'épaulement 21 et plus précisément l'arête 22 forment un deuxième repère complémentaire de contrôle et la portion droite 19 forme un troisième repère complémentaire de contrôle.

La bague de positionnement 10 est réalisée en une seule pièce.

Les figures 5 et 7 montrent le palet 1 illustré sur la figure 4 emboîté partiellement dans la bague de positionnement 10 illustrée sur la figure 6 selon des angles de vue différents. La figure 5 est une vue schématique.

Sur la figure 7 sont également illustrées les différentes directions de de déplacement en translation du palet 1 dans la bague 10, à savoir Tx, Ty et Tz, correspondant aux trois axes d'un repère orthonormal basique ainsi que les directions de déplacement en rotation respectivement autour de chacune de ces directions de translation, à savoir Rx, Ry et Rz.

On observera que les directions de translation Tx et Ty se trouvent ici dans un même plan dit horizontal et que ces axes Tx et Ty s'étendent dans le diamètre au palet 1, tandis que la direction de translation Tz correspond sensiblement à l'épaisseur du palet 1 et se trouve ici dans un plan dit vertical (c'est-à-dire orthogonal au plan comportant les axes Tx et Ty).

La figure 8 montre quant à elle le palet 1 partiellement emboîté dans la bague 10 selon la vue en coupe repérée VIII-VIII sur la figure 7.

On observera que le contour interne 20 de la bague 10 est concentrique avec la tranche 4 du palet 1.

On observera en outre que lorsque le palet 1 est emboîté partiellement dans la cavité 13 de la bague 10, la tranche 4 du palet 1 est en contact avec le contour interne 20 de la bague et plus précisément avec des portions internes incurvées des blocs de guidage 16.

En outre, le chanfrein 5 du palet 1 est également au moins partiellement en contact avec l'arête 22 définie par l'épaulement 21 de la bague 10.

En outre, le méplat 6 est en regard, voire au contact, avec la portion droite 19 de l'autre bloc de guidage 18 de la bague 10.

Le premier groupe formé des premiers repères mécaniques de positionnement et complémentaire de contrôle, autrement dit la tranche 4 du palet 1 et le contour interne 20 de la bague 10, permet de positionner de manière sûre selon les directions de translation Tx, Ty et selon les directions de rotation Rx, Ry le palet 1 sur la bague 10.

Le deuxième groupe formé des deuxièmes repères mécaniques de positionnement et complémentaire de contrôle, autrement dit le chanfrein 5 du palet 1 et l'arête 22 de l'épaulement 21 de la bague 10, permet de positionner de manière sûre selon la direction de translation Tz et aussi selon les directions de translation Tx, Ty le palet 1 sur la bague 10.

En outre, le troisième groupe formé des troisièmes repères mécaniques de positionnement et complémentaire de contrôle, autrement dit le méplat 6 et la portion droite 19 de l'autre bloc de guidage 18 de la bague 10, permet de positionner de manière sûre selon la direction de rotation Rz le palet 1 sur la bague 10.

Ainsi, dans la position du palet 1 par rapport à la bague 10 visible sur les figures 5, 7 et 8, le palet 1 est en position dite définitive selon toutes les directions de translation Tx, Ty, Tz et de rotation Rx, Ry et Rz,. Le simple positionnement du palet 1 sur la bague 10 assure donc la bonne position dite définitive de la face concave 33 du palet 1 par rapport à la face avant 2 et par conséquent de la face arrière (pas encore usinée) par rapport à la face avant de la lentille, comme décrit ci-après plus en détail.

On va maintenant décrire plus en détail le procédé de fabrication de la lentille optique, en référence aux figures 9 à 11 et aussi aux figures 1 à 3.

Le procédé comporte l'étape 101 de fournir un palet SF1, lequel palet SF1 correspond au palet brut (premier semi-fini) tel que décrit ci-dessus. Ce palet SF1 est en matière plastique et présente une face convexe 32 ainsi qu'une face concave 33 qui est non usinée et issue de moulage.

Le procédé comporte l'étape 102 de filmer la face concave 33, aussi appelée face arrière (face AR), du palet SF1. Il s'agit de l'application sur cette face concave 33 d'un film plastique (non représenté) permettant de protéger cette dernière.

Le procédé comporte l'étape 103 de bloquer la face concave 33 du palet SF1. Ce blocage est visible sur la figure 1 sur laquelle est représenté un ensemble comportant le palet SF1, ici référencé 1, un pion de blocage et de maintien 30 et un matériau liant 31 ici formé par un métal dit fusible.

Lors de cette étape 103, le palet SF1 est monté sur un support (non représenté) au fond duquel est positionné le pion 30.

Ce support comporte par exemple une encoche d'injection à travers laquelle est injecté le métal liant sous forme de liquide. Une fois durci, ce métal 31 assujetti le pion 30 au palet SF1, par sa face concave 33.

Le procédé comporte en outre l'étape 110 d'usiner la face convexe 32 du palet SF1, aussi appelée face avant. Cet usinage est également illustré sur la figure 1, laquelle montre d'une part la face convexe 32 du palet SF1 ainsi que la zone à usiner pour former la face avant 2 de la lentille optique.

Le procédé comporte l'étape 111 d'usiner les repères mécaniques de positionnement sur le palet SF1, à savoir la tranche globalement circulaire 4, le chanfrein 5 ainsi que le méplat 6. Ces trois repères mécaniques de positionnement ménagés sur le palet SF1 permettent, comme indiqué plus haut et aussi ci-après, de positionner le palet SF2 (deuxième semi-fini) dans la bague de positionnement 10, à la fois dans les directions de translation Tx, Ty et Tz et de rotation Rx, Ry et Rz.

Cette étape 111 d'usinage comporte en particulier l'étape 121 de déborder un contour du palet SF1 pour former la tranche globalement circulaire 4 et ainsi former le premier repère mécanique de positionnement du palet SF1.

Cette étape 111 d'usinage comporte en outre l'étape 122 de chanfreiner une partie du palet SF1 située entre la tranche globalement circulaire 4 et la face convexe 32 pour former une portion biseautée et ainsi former le deuxième repère mécanique de positionnement de ce palet SF1.

Cette étape 111 d'usinage comporte également l'étape 123 d'usiner le méplat 6 au niveau du contour du palet SF1 pour former un troisième repère mécanique de positionnement de ce palet SF1.

L'usinage du repère selon Rz peut aboutir à autre chose qu'un méplat 6 visible notamment sur la figure 4 et qu'en variante, ce repère peut être un cran ménagé sur la tranche globalement circulaire 4.

Les étapes 110 et 111 peuvent être réalisées dans une même machine d'usinage, durant une même opération d'usinage ou durant deux opérations successives, ou dans des machines distinctes. L'étape 110 peut être mise en œuvre avant l'étape 111, ou inversement.

L'usinage de la face convexe 32 du palet SF1 ainsi que l'usinage des repères mécaniques de positionnement sur ce palet SF1 sont réalisés en relation les uns avec les autres, et plus précisément, la face convexe est réalisée par rapport aux repères mécaniques de positionnement ou inversement. Ce procédé permet donc de créer une référence de positionnement entre la face convexe et les repères mécaniques de positionnement.

Cette relation est particulièrement simple à obtenir puisque les deux étapes d'usinage sont réalisées en même temps, ou dans la foulée, sur une même machine d'usinage, laquelle utilise un même référentiel d'usinage et positionne donc la surface et les repères de positionnement avec une grande précision l'un par rapport à l'autre, voire un même fichier de surface.

Le procédé comporte ensuite l'étape 112 de polir la face avant du palet SF1, laquelle face avant est désormais représentative de la face avant 2 de la lentille puisque la face convexe 32 a été usinée.

Le procédé comporte également l'étape 113 de débloquer la face concave 33 du palet SF1, laquelle étape 113 est similaire à l'étape 115 de déblocage décrite ci-dessus.

On obtient alors le palet SF2 aussi appelé deuxième semi-fini.

Une fois ce deuxième semi-fini réalisé, ce dernier peut être par exemple stocké et est bien souvent envoyé sur un autre site, pour la réalisation notamment de la face arrière 3 de la lentille 1, grâce à une machine d'usinage différente de celle(s) utilisée(s) ci-dessus.

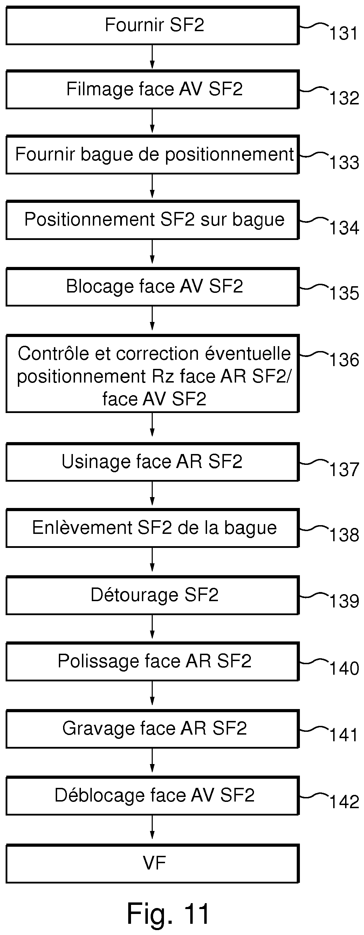

Le procédé de fabrication de cette lentille optique comporte en outre, comme illustré sur la figure 11, l'étape 131 de fournir ce deuxième semi-fini, autrement dit le palet SF2.

Le procédé comporte l'étape 132 de filmer la face avant 2 du palet SF2. Il s'agit ici de filmer à l'aide d'un film plastique (non représenté) la face avant 2.

Le procédé comporte l'étape 133 de fournir la bague de positionnement décrite ci-dessus en référence notamment aux figures 5 à 8, ainsi que l'étape 134 de positionner le palet SF2 sur cette bague 10, comme cela est visible sur la figure 2.

Le positionnement du palet SF2 sur la bague 10 est réalisé de telle manière que ce palet SF2 est partiellement emboîté dans la cavité 13 de cette bague 10, avec la tranche 4 du palet SF2 qui est en contact avec le contour interne 20 décrit par la cavité 13, et en particulier avec les portions internes incurvées des blocs de guidage 16, avec le chanfrein 5 du palet SF2 qui est également au moins partiellement en contact avec l'arête 22 de l'épaulement 21 de la bague 10, et avec le méplat 6 qui est en regard, voire au contact, avec la portion interne 19 de l'autre bloc de guidage 18 de cette bague 10.

Ainsi, le premier groupe formé de la tranche 4 et du contour interne 20 permet de positionner de manière sûre, c'est-à-dire sans nécessité de vérification postérieure, le palet SF2 sur la bague 10, selon les directions de translation Tx et Ty et selon les directions de rotation Rx et Ry.

En outre, le deuxième groupe formé du chanfrein 5 et de l'arête 22 de l'épaulement 21 permet de positionner également de manière sûre le palet SF2 sur la bague 10, essentiellement selon la direction de translation Tz mais aussi selon les directions de translation Tx et Ty.

Enfin, le troisième groupe formé du méplat 6 et de la portion droite 19 permet de positionner également de manière sûre le palet SF2 sur la bague 10, selon l'autre direction de rotation Rz.

Le palet SF2 ainsi positionné est donc dans une position définitive correspondant par conséquent au positionnement de la face arrière pas encore usinée de la lentille par rapport à la face avant 2, et ici plus précisément au positionnement de la face concave 33 du palet SF2 par rapport à la face avant 2.

Le procédé comporte alors l'étape 135 de bloquer la face avant 2 du palet SF2 pour bloquer le palet SF2 en position dans la bague 10. Lors de cette étape 135, le palet SF2 est monté sur la bague de positionnement 10 au fond duquel est positionné le pion de blocage et de maintien 30 (identique au support 30 visible figure 1).

Un matériau liant 31 sous forme de métal liquide est injecté à travers l'encoche d'injection 25 dans la cavité 13 (entre la face avant 2 et le pion 30 et la paroi de fond 23 de la bague 10), et une fois durci, ce métal 31 assujetti le pion 30 au palet SF2 par sa face concave 33.

Le procédé peut en outre comporter l'étape 136 de contrôler la position selon la direction de rotation Rz de la face concave 33 du palet SF2 par rapport à la face avant 2.

Dans l'exemple illustré ici, cette étape 136 de contrôle est caduque puisque grâce au troisième repère mécanique de positionnement, à savoir le méplat 6, et grâce au troisième repère mécanique complémentaire de contrôle, à savoir la portion interne 19, la position du palet SF2 selon Rz est fixe, c'est-à-dire que le palet SF2 ne peut pas se déplacer en rotation selon Rz et qu'il est immobilisé selon Rz dans sa position définitive.

Dans les variantes indiquées ci-dessus où il ne s'agit pas d'un méplat 6 et d'une portion interne droite 19 comme représentés sur les figures 4 et 6, mais où il s'agit seulement d'un cran ménagé sur le palet SF2, alors cette étape 136 de contrôle de la position du palet SF2 selon Rz dans la bague 10 peut être nécessaire.

Cette étape 136 de contrôle peut par exemple être réalisée à l'œil par un opérateur, ou grâce à un palpeur mécanique ou encore grâce à un dispositif de visualisation tel qu'une caméra.

Cette étape de contrôle 136 peut donc comporter l'étape de déterminer d'éventuelles erreurs de positionnement selon Rz ainsi que l'étape de corriger ces éventuelles erreurs de positionnement.

Cette étape de correction est ici réalisée directement sur un fichier de surface définissant la face arrière 3 de la lentille à obtenir.

Cette étape 136 de contrôle et de correction éventuelle comporte donc en outre éventuellement une étape d'envoi d'un fichier corrigé à la machine d'usinage configurée pour réaliser la face arrière 3 de la lentille optique.

Le procédé comporte en outre l'étape 137 d'usiner la face concave 33 du palet SF2 pour obtenir la face arrière 3 de la lentille optique 1.

Cette étape est visible sur la figure 3 où l'on voit le palet SF2 bloqué en position sur le pion 30 et la face concave 33 à usiner du palet SF2 pour obtenir la face arrière 3 de la lentille optique 1.

Le procédé comporte en outre l'étape 138 d'enlever le palet SF2 ainsi usiné de la bague 10 puis l'étape 139 de détourer ce palet SF2. Ce détourage est réalisé selon un diamètre prédéterminé.

Le procédé comporte en outre l'étape 140 de polir la face arrière 3 du palet SF2 ainsi que l'étape 141 de graver, ou de marquer par gravure, cette même face arrière 3 du palet SF2.

Enfin, le procédé de fabrication comporte l'étape 142 de débloquer la face avant 2 du palet SF2 afin de fournir la lentille optique 1 finie, pour former par la suite un verre de lunettes fini (VF).

Les figures 12 à 15 illustrent le palet 1 selon différentes variantes de réalisation du chanfrein 5.

Sur les figures 12 et 13, le palet 1 présente une face avant ici du type progressif et le chanfrein 5 qu'il comporte présente respectivement un angle d'inclinaison α₁ d'environ 45° et un angle d'inclinaison α₂ d'environ 20°, par rapport à la tranche 4 du palet 1.

Ces angles d'inclinaison α₁ et α₂ distincts du chanfrein 5 sont déterminés de sorte à augmenter le contact entre le palet 1 et la bague de positionnement 10 en fonction d'au moins une contrainte prédéterminée.

Sur les figures 12 et 13 sont illustrés des périmètres de contact 50 entre le palet 1 et la bague 10.

Ces périmètres de contact 50 sont de longueurs distinctes le long du chanfrein 5 ; et sont représentatifs de longueurs de secteurs angulaires notés θ₁ et θ₂, passant par le centre optique ou le point de référence de prisme ou encore le centre géométrique P de la lentille, secteurs auxquels il faut soustraire la longueur du méplat 6 du palet 1.

Le périmètre de contact 50 entre l'épaulement d'une bague déterminée et le chanfrein 5 d'angle d'inclinaison α₁ est représentatif du secteur angulaire inférieur θ₁, qui est inférieur au secteur angulaire θ₂ qui représente le périmètre de contact 50 entre l'épaulement de cette bague déterminée et le chanfrein 5 d'angle d'inclinaison α₂.

En d'autres termes, le pourcentage de contact entre le palet illustré sur la figure 12 et la bague déterminée est moindre que le pourcentage de contact entre le palet illustré sur la figure 13 et cette bague déterminée.

Par conséquent, le palet illustré sur la figure 13 est plus stable dans la bague déterminée que le palet illustré sur la figure 12 dans cette même bague.

Sur les figures 14 et 15, le palet 1 présente une face avant ici du type régressif et le chanfrein 5 qu'il comporte présente respectivement un angle d'inclinaison α₁ d'environ 45° et un angle d'inclinaison α₃ d'environ 30°, par rapport à la tranche 4 du palet 1.

Ces angles d'inclinaison α₁ et α₃ distincts du chanfrein 5 sont eux aussi déterminés de sorte à augmenter le contact entre le palet 1 et la bague de positionnement 10 en fonction d'au moins une contrainte prédéterminée.

Sur les figures 14 et 15 sont illustrés également des périmètres de contact 50 entre le palet 1 et la bague 10, avec ces périmètres 50 qui ont ici une même longueur sensiblement égale à la longueur du chanfrein 5.

Sur les figures 14 et 15 sont en outre illustrés des rayons Rv représentatifs du rayon d'une zone optiquement utile souhaitée de la lentille optique et des rayons Rr₁ et Rr₂ représentatifs du rayon minimum d'une zone optiquement utile obtenue sur le palet 1 avec le chanfrein 5 ménagé sur ce dernier, avec ces rayons qui passent par le centre optique ou le point de référence de prisme ou encore le centre géométrique P de la lentille.

La zone optiquement utile est la zone de la lentille optique qui comporte les caractéristiques optiques liées à la prescription du porteur. Il s'agit généralement d'une zone de la lentille qui se trouve dans une monture de lunettes lorsque cette lentille est taillée à la forme de la monture et est montée dans cette dernière.

Cette zone optiquement utile ne doit pas comporter le chanfrein 5.

Le rayon Rr₁ obtenu avec un chanfrein 5 d'angle d'inclinaison α₁ est inférieur au rayon Rr₂ obtenu avec un chanfrein 5 d'angle d'inclinaison α₃.

En d'autres termes, le diamètre de lentille optique pouvant être obtenu avec un chanfrein 5 d'angle d'inclinaison α₃ est plus grand le diamètre de lentille optique pouvant être obtenu avec un chanfrein 5 d'angle d'inclinaison α₁.

Par conséquent, la lentille qui peut être obtenue à partir du palet illustré sur la figure 15 est plus ouverte que la lentille pouvant être obtenue avec le palet illustré sur la figure 14.

L'ouverture de la lentille optique est représentative de la taille de la zone optiquement utile.

Les deux contraintes présentées ci-dessus, à savoir la stabilité du palet dans une bague déterminée et l'ouverture de la lentille, peuvent être pris isolément ou en combinaison pour la détermination de l'angle d'inclinaison du chanfrein ménagé sur le palet.

On notera que dans les exemples présentés ci-dessus ont été pris des palets ayant des surfaces progressive et régressive, mais il pourrait aussi s'agir d'un palet ayant une surface torique.

Plus généralement, la détermination de l'angle d'inclinaison du chanfrein ménagé sur le palet est avantageuse dès lors que le palet présente une surface qui n'est pas une surface de révolution.

Cette détermination de l'angle d'inclinaison est réalisée préalablement aux étapes 110 et 111 d'usinage de la face avant et des repères sur le palet.

Cette détermination de l'angle d'inclinaison est par exemple mise en œuvre lors de la définition de la géométrie de la lentille et de la géométrie des repères sur le palet en fonction d'une bague déterminée.

Cette détermination de l'angle d'inclinaison est par exemple réalisée par calcul itératif, en calculant le périmètre de contact entre le chanfrein et l'épaulement de la bague déterminée jusqu'à obtenir un angle d'inclinaison qui permette de fournir un pourcentage de contact déterminé, par exemple supérieur à environ 55% du périmètre de contact entre le chanfrein et l'épaulement ; dans le but de satisfaire à la contrainte de stabilité.

En variante ou en complément, cette détermination de l'angle d'inclinaison est par exemple réalisée par calcul itératif, en calculant le rayon résultant du palet chanfreiné jusqu'à obtenir un angle d'inclinaison qui permette de fournir un rayon résultant au moins égal voire supérieur d'environ 1 mm à un rayon de lentille déterminé, par exemple supérieur à environ 55% du périmètre de contact entre le chanfrein et l'épaulement ; dans le but de satisfaire à la contrainte d'ouverture.

Dans des variantes non illustrées :
- la première face du palet à être usinée n'est pas la face avant mais plutôt la face arrière, avec la face avant qui est donc usinée ensuite ; plus généralement, on peut parler de première face et de deuxième face indépendamment de la position avant ou arrière et de la forme concave ou convexe ;
- la portion en rampe n'est pas une portion biseautée ou conique mais plutôt une portion en forme de congé ou en forme d'épaulement, et on appelle ici chanfrein ou moulure une portion en rampe ayant l'une quelconque de ces formes ;
- la bague de positionnement ne présente pas une forme globalement cylindrique mais plutôt une forme globalement rectangulaire, et cette bague peut présenter plus ou moins de blocs de guidage ;
- le chanfrein n'est pas ménagé sur tout le contour du palet mais seulement sur une portion du contour, voire sur plusieurs portions du contour ;
- le troisième repère mécanique de positionnement sur le palet n'est pas un méplat, ni un cran, mais plutôt une marque faite par gravure à la périphérie de la face avant ;
- le palet n'est pas enlevé de la bague et le procédé ne comporte pas d'étape de détourage du palet à un diamètre déterminé ; et les gravures réalisées sur la face concave du palet sont positionnées par rapport au chanfrein ; et l'étape de graver la face concave du palet est mise en œuvre avant l'étape de détourage et/ou l'étape de polissage, c'est-à-dire lorsque le palet est monté dans la bague ;
- la face arrière de la lentille ne comporte pas de marquages temporaires ou permanents mais c'est plutôt la face avant de la lentille qui les comporte ;
- les étapes de débloquer le palet et d'enlever le palet de la bague sont mises en œuvre avant l'étape d'usiner la face arrière ;
- l'étape de correction n'est pas réalisée directement sur le fichier de surface définissant la face arrière 3 de la lentille à obtenir mais plutôt sur la position angulaire d'une broche de la machine d'usinage ; et/ou
- le matériau liant est différent d'un métal liquide injecté mais il s'agit plutôt d'une cire liquide ou d'un dispositif mécanique de fixation.

On rappelle plus généralement que l'invention ne se limite pas aux exemples décrits et représentés.

## Revendications

1. Procédé de fabrication d'une lentille optique présentant une première face (2) et une deuxième face (3) opposée à ladite première face (2), comportant une étape de positionnement de ladite deuxième face (3) par rapport à ladite première face (2) pour l'usinage de ladite deuxième face (3), laquelle étape de positionnement comporte les étapes de :
- fournir (131) un palet (1) pour former ladite lentille optique, lequel palet (1) présente une face supérieure (32) pour former ladite première face (2), une face inférieure (33), opposée à ladite face supérieure (32), pour former ladite deuxième face (3) et au moins un repère de positionnement ;
- fournir (133) une bague de positionnement (10) présentant au moins un repère de contrôle ;
- monter (134) ledit palet (1) sur ladite bague de positionnement (10) ;
- bloquer (135) en position ledit palet (1) sur un pion de blocage et de maintien (30), ladite bague de positionnement (10) étant alors interposée entre ledit palet (1) et ledit pion de blocage et de maintien (30) ;
ledit palet (1) comportant une tranche globalement circulaire (4) formant un premier repère mécanique de positionnement et au moins une portion en rampe (5) formant un deuxième repère mécanique de positionnement, ladite au moins une portion en rampe (5) étant ménagée entre ladite tranche globalement circulaire (4) et ladite face supérieure (32) ; ladite bague de positionnement (10) présentant une forme globalement cylindrique et comportant une cavité (13) définissant un contour interne globalement circulaire (20) formant un premier repère complémentaire de contrôle, lequel contour interne (20) étant concentrique avec ladite tranche (4) dudit palet (1), et un épaulement (21) formant un deuxième repère complémentaire de contrôle ; et ladite étape de fournir (131) ledit palet (1) comportant les étapes de :
- déborder (121) au moins partiellement le contour dudit palet (1) pour former ladite tranche globalement circulaire (4) et ainsi former ledit premier repère mécanique de positionnement dudit palet (1);
**caractérisé par** l'étape de chanfreiner (122) au moins partiellement une partie dudit palet (1) située entre ladite tranche globalement circulaire (4) et ladite face convexe (32) pour former ladite au moins une portion en rampe (5) et ainsi former ledit deuxième repère mécanique de positionnement dudit palet (1) ; et
ladite étape (134) de monter ledit palet (1) sur ladite bague (10) comporte l'étape d'emboîter au moins partiellement ledit palet (1) dans ladite cavité (13) de ladite bague (10), avec ladite tranche (4) dudit palet (1) qui est au moins partiellement en contact avec ledit contour interne (20) de ladite bague (10) et ladite au moins une portion en rampe (5) dudit palet (1) qui est également en contact avec une arête définie par ledit épaulement (21) de ladite bague (10).

2. Procédé selon la revendication 1, **caractérisé en ce que** ledit palet (1) comporte en outre un troisième repère mécanique de positionnement (6) au niveau de ladite tranche globalement circulaire (4), par exemple un méplat, et ladite bague de positionnement (10) comporte un troisième repère complémentaire de contrôle (18, 19) au niveau dudit contour interne (20), par exemple une portion droite, avec ledit troisième repère mécanique de positionnement (6) et ledit troisième repère mécanique de contrôle (18, 19) qui sont configurés pour immobiliser ledit palet (1) en rotation autour d'un axe (Tz) traversant lesdites faces supérieure (32) et inférieure (33) dudit palet (1), par rapport à ladite bague (10), lorsque ledit palet (1) est monté sur ladite bague (10).

3. Procédé selon la revendication 1, **caractérisé en ce que** ledit palet (1) comporte en outre un troisième repère mécanique ou visuel de positionnement (6) au niveau de ladite tranche globalement circulaire (4) ou de la périphérie de ladite face supérieure (32) ; et ledit procédé comporte en outre une étape de contrôle (136) visuel ou mécanique de la position angulaire dudit palet (1) par rapport à ladite bague (10), laquelle position angulaire est prise par rapport à un axe (Tz) traversant lesdites faces supérieure (32) et inférieure (33) dudit palet (1), lorsque ledit palet (1) est monté sur ladite bague (10) ; ainsi qu'une étape de détermination d'une éventuelle erreur de position angulaire.

4. Procédé selon l'une quelconque des revendications 1 à 3, **caractérisé en ce qu'**il comporte en outre l'étape d'usiner (137) ladite face inférieure (33) dudit palet (1) pour former ladite deuxième face (3) de ladite lentille optique.

5. Procédé selon la revendication 4, **caractérisé en ce qu'**il comporte en outre les étapes de :
- détourer (139) ledit palet (1) à un diamètre prédéterminé ;
- polir (140) ladite deuxième face (3) préalablement usinée ;
- graver (141) ladite deuxième face (3) préalablement usinée.

6. Procédé selon l'une quelconque des revendications 1 à 5, **caractérisé en ce qu'**il comporte en outre l'étape de filmer (132) ladite face supérieure (32) dudit palet (1) avant ladite étape de monter ledit palet (1) sur ladite bague de positionnement (10).

7. Procédé selon l'une quelconque des revendications 1 à 6, **caractérisé en ce que** ladite bague de positionnement (10) comporte en outre une encoche d'injection (25) débouchant dans ladite cavité (13) et ladite étape (135) de bloquer en position ledit palet (1) sur ledit pion de blocage et de maintien (30) comporte l'étape d'injecter un matériau liant (31), par exemple du métal, dans ladite encoche d'injection (25).

8. Procédé selon l'une quelconque des revendications 1 à 7, **caractérisé en ce que** ladite étape de fournir (131) ledit palet (1) comporte l'étape d'usiner (123) un troisième repère mécanique de positionnement dudit palet (1) au niveau dudit contour dudit palet (1).

9. Procédé selon l'une quelconque des revendications 1 à 8, **caractérisé en ce que** ladite étape de fournir (131) ledit palet (1) comporte en outre une étape d'usiner (110) ladite face supérieure (32) dudit palet (1) pour former ladite face supérieure (2) de ladite lentille optique.

10. Ensemble comportant un palet (1) pour former une lentille optique présentant une première face (2) et une deuxième face (3) opposée à ladite première face (2), et une bague de positionnement (10) sur laquelle est monté ledit palet (1), lequel palet (1) présente une face supérieure (32) pour former ladite première face (2) et une face inférieure (33), opposée à ladite face supérieure (32), pour former ladite deuxième face (3) ; ledit palet (1) comportant en outre une tranche globalement circulaire (4) formant un premier repère mécanique de positionnement et au moins une portion en rampe (5) formant un deuxième repère mécanique de positionnement, ladite au moins une portion en rampe (5) étant ménagée entre ladite tranche globalement circulaire (4) et ladite face supérieure (32) ; ladite bague de positionnement (10) présentant une forme globalement cylindrique et comportant une cavité (13) définissant un contour interne globalement circulaire (20) formant un premier repère complémentaire de contrôle, lequel contour interne (20) étant concentrique avec ladite tranche (4) dudit palet (1), et un épaulement (21) formant un deuxième repère complémentaire de contrôle ; ledit palet (1) étant configuré pour être au moins partiellement emboîté dans ladite cavité (13) de ladite bague (10), avec ladite tranche (4) dudit palet (1) qui est configurée pour être au moins partiellement en contact avec ledit contour interne (20) de ladite bague (10) et ladite au moins une portion en rampe (5) dudit palet (1) qui est configurée pour être également en contact avec ledit épaulement (21) de ladite bague (10) ; **caractérisé en ce que** ledit palet (1) comporte un chanfrein circulaire (5) formant ladite portion en rampe, lequel chanfrein circulaire (5) présente une pente comprise entre environ 20° et environ 45°, et ladite bague (10) comporte une arête (22) définie par ledit épaulement (21), avec ledit chanfrein circulaire (5) qui est en appui sur ladite arête (22) lorsque ledit palet (1) est partiellement emboîté dans ladite bague (10).

11. Ensemble selon la revendication 10, **caractérisé en ce que** ledit palet (1) comporte en outre un troisième repère mécanique de positionnement (6) au niveau de ladite tranche globalement circulaire (4), par exemple un méplat, et ladite bague de positionnement (10) comporte un troisième repère complémentaire de contrôle (18, 19) au niveau dudit contour interne (20), par exemple une portion droite, avec ledit troisième repère mécanique de positionnement (6) et ledit troisième repère mécanique de contrôle (18, 19) qui sont configurés pour immobiliser ledit palet (1) en rotation autour d'un axe (Tz) traversant lesdites faces supérieure (32) et inférieure (33) dudit palet (1), par rapport à ladite bague (10), lorsque ledit palet (1) est emboîté partiellement sur ladite bague (10).

12. Ensemble selon la revendication 11, **caractérisé en ce que** ledit troisième repère mécanique de positionnement (6) est ménagé parallèlement à un axe nasal-temporal dudit palet (1) pour former ladite lentille optique.

13. Ensemble selon l'une quelconque des revendications 10 à 12, **caractérisé en ce que** ladite bague de positionnement (10) comporte en outre une encoche d'injection (25) débouchant dans ladite cavité (13) et ledit ensemble comporte en outre un pion de blocage et de maintien (30) sur lequel ledit palet (1) est configuré pour être bloqué en position grâce à un matériau liant injecté à travers ladite encoche d'injection (25), ladite bague de positionnement (10) étant alors interposée entre ledit palet (1) et ledit pion de blocage et de maintien (30).

14. Ensemble selon l'une quelconque des revendications 10 à 13, **caractérisé en ce que** ladite bague (10) comporte une pluralité de blocs de guidage (16) régulièrement disposés autour de ladite cavité (13) et définissant ledit contour interne (20).

15. Ensemble selon l'une quelconque des revendications 10 à 14, **caractérisé en ce que** ladite au moins une portion en rampe (5) dudit palet (1) présente un angle d'inclinaison (α₁, α₂, α₃) par rapport à ladite tranche (4) dudit palet (1), lequel angle d'inclinaison (ai, α₂, α₃) est déterminé de sorte à augmenter le contact entre ledit palet (1) et ladite bague de positionnement (10) en fonction d'au moins une contrainte prédéterminée.

16. Ensemble selon la revendication 15, **caractérisé en ce que** ledit angle d'inclinaison (α₁, α₂, α₃) de ladite au moins une portion en rampe (5) est déterminé en fonction d'une caractéristique représentative d'un périmètre de contact entre ladite au moins une portion en rampe (5) dudit palet (1) et ledit épaulement (21) de ladite bague (10) pour assurer la stabilité dudit palet (1) dans ladite bague (10),

17. Ensemble selon l'une des revendications 15 et 16, **caractérisé en ce que** ledit angle d'inclinaison (α₁, α₂, α₃) de ladite au moins une portion en rampe (5) est déterminé en fonction d'une caractéristique représentative d'une zone optiquement utile de ladite lentille optique pour assurer une ouverture prédéterminée de ladite lentille optique.

## Patentansprüche

1. Verfahren zur Herstellung einer optischen Linse, die eine erste Seite (2) und eine zur ersten Seite (2) entgegengesetzte zweite Seite (3) aufweist, umfassend einen Schritt des Positionierens der zweiten Seite (3) in Bezug auf die erste Seite (2) zum Bearbeiten der zweiten Seite (3), wobei der Positionierungsschritt die folgenden Schritte umfasst:
- Bereitstellen (131) einer Scheibe (1) zum Bilden der optischen Linse, wobei die Scheibe (1) eine Oberseite (32) zum Bilden der ersten Seite (2), eine zur Oberseite (32) entgegengesetzte Unterseite (33) zum Bilden der zweiten Seite (3) und mindestens eine Positionierungsmarkierung aufweist;
- Bereitstellen (133) eines Positionierungsrings (10), der mindestens eine Kontrollmarkierung aufweist;
- Montieren (134) der Scheibe (1) auf dem Positionierungsring (10);
- Sichern (135) der Scheibe (1) in der Position auf einem Sicherungs- und Haltestift (30), wobei der Positionierungsring (10) daraufhin zwischen der Scheibe (1) und dem Sicherungs- und Haltestift (30) angeordnet ist; wobei die Scheibe (1) einen insgesamt kreisförmigen Rand (4), der eine erste mechanische Positionierungsmarkierung bildet, und mindestens einen Rampenabschnitt (5), der eine zweite mechanische Positionierungsmarkierung bildet, umfasst, wobei der mindestens eine Rampenabschnitt (5) zwischen dem insgesamt kreisförmigen Rand (4) und der Oberseite (32) ausgebildet ist; wobei der Positionierungsring (10) eine insgesamt zylindrische Form aufweist und einen Hohlraum (13), der eine insgesamt kreisförmige Innenkontur (20) definiert, die eine erste ergänzende Kontrollmarkierung bildet, wobei die Innenkontur (20) konzentrisch zu dem Rand (4) der Scheibe (1) ist, und einen Absatz (21), der eine zweite ergänzende Kontrollmarkierung bildet, umfasst; und wobei der Schritt des Bereitstellens (131) der Scheibe (1) die folgenden Schritte umfasst:
- zumindest teilweises Randbearbeiten (121) der Kontur der Scheibe (1), um den insgesamt kreisförmigen Rand (4) zu bilden und somit die erste mechanische Positionierungsmarkierung der Scheibe (1) zu bilden; **gekennzeichnet durch** den Schritt des mindestens teilweisen Anfasens (122) eines Teils der Scheibe (1), der zwischen dem insgesamt kreisförmigen Rand (4) und der konvexen Seite (32) gelegen ist, um den mindestens einen Rampenabschnitt (5) zu bilden und somit die zweite mechanische Positionierungsmarkierung der Scheibe (1) zu bilden; und
der Schritt (134) des Montierens der Scheibe (1) auf dem Ring (10) den Schritt des mindestens teilweisen Einpassens der Scheibe (1) in den Hohlraum (13) des Rings (10) umfasst, mit dem Rand (4) der Scheibe (1), der mindestens teilweise in Kontakt mit der Innenkontur (20) des Rings (10) ist, und dem mindestens einen Rampenabschnitt (5) der Scheibe (1), der ebenfalls in Kontakt mit einer Kante ist, die durch den Absatz (21) des Rings (10) definiert wird.

2. Verfahren nach Anspruch 1, **dadurch gekennzeichnet, dass** die Scheibe (1) ferner eine dritte mechanische Positionierungsmarkierung (6) an dem insgesamt kreisförmigen Rand (4) umfasst, beispielsweise eine Abflachung, und der Positionierungsring (10) eine dritte ergänzende Kontrollmarkierung (18, 19) an der Innenkontur (20) umfasst, beispielsweise einen geraden Abschnitt, mit der dritten mechanischen Positionierungsmarkierung (6) und der dritten mechanischen Kontrollmarkierung (18, 19), die dazu ausgestaltet sind, die Scheibe (1) um eine Achse (Tz), welche die Oberseite (32) und Unterseite (33) der Scheibe (1) durchdringt, in Bezug auf den Ring (10) gegen Verdrehen zu sichern, wenn die Scheibe (1) auf dem Ring (10) montiert ist.

3. Verfahren nach Anspruch 1, **dadurch gekennzeichnet, dass** die Scheibe (1) ferner eine dritte mechanische oder visuelle Positionierungsmarkierung (6) an dem insgesamt kreisförmigen Rand (4) oder dem Umfang der Oberseite (32) umfasst; und das Verfahren ferner einen Schritt des visuellen oder mechanischen Kontrollierens (136) der Winkelposition der Scheibe (1) in Bezug auf den Ring (10) umfasst, wobei die Winkelposition in Bezug auf eine Achse (Tz) erfasst wird, welche die Oberseite (32) und Unterseite (33) der Scheibe (1) durchdringt, wenn die Scheibe (1) auf dem Ring (10) montiert ist; sowie einen Schritt des Bestimmens eines etwaigen Winkelpositionsfehlers.

4. Verfahren nach einem der Ansprüche 1 bis 3, **dadurch gekennzeichnet, dass** es ferner den Schritt des Bearbeitens (137) der Unterseite (33) der Scheibe (1) umfasst, um die zweite Seite (3) der optischen Linse zu bilden.

5. Verfahren nach Anspruch 4, **dadurch gekennzeichnet, dass** es ferner die folgenden Schritte umfasst:
- Randbearbeiten (139) der Scheibe (1) auf einen vorbestimmten Durchmesser;
- Polieren (140) der zuvor bearbeiteten zweiten Seite (3);
- Gravieren (141) der zuvor bearbeiteten zweiten Seite (3) .

6. Verfahren nach einem der Ansprüche 1 bis 5, **dadurch gekennzeichnet, dass** es ferner den Schritt umfasst, die Oberseite (32) der Scheibe (1) vor dem Schritt des Montierens der Scheibe (1) auf dem Positionierungsring (10) mit einem Film zu beschichten (132).

7. Verfahren nach einem der Ansprüche 1 bis 6, **dadurch gekennzeichnet, dass** der Positionierungsring (10) ferner eine Einspritzkerbe (25) umfasst, die in den Hohlraum (13) mündet, und der Schritt (135) des Sicherns der Scheibe (1) in der Position auf dem Sicherungs- und Haltestift (30) den Schritt umfasst, ein bindendes Material (31), zum Beispiel Metall, in die Einspritzkerbe (25) zu spritzen.

8. Verfahren nach einem der Ansprüche 1 bis 7, **dadurch gekennzeichnet, dass** der Schritt des Bereitstellens (131) der Scheibe (1) den Schritt umfasst, eine dritte mechanische Positionierungsmarkierung der Scheibe (1) an der Kontur der Scheibe (1) zu bearbeiten (123).

9. Verfahren nach einem der Ansprüche 1 bis 8, **dadurch gekennzeichnet, dass** der Schritt des Bereitstellens (131) der Scheibe (1) ferner einen Schritt umfasst, die Oberseite (32) der Scheibe (1) zu bearbeiten (110), um die Oberseite (2) der optischen Linse zu bilden.

10. Anordnung, umfassend eine Scheibe (1) zum Bilden einer optischen Linse, die eine erste Seite (2) und eine zur ersten Seite (2) entgegengesetzte zweite Seite (3) aufweist, und einen Positionierungsring (10), auf dem die Scheibe (1) montiert wird, wobei die Scheibe (1) eine Oberseite (32) zum Bilden der ersten Seite (2) und eine zur Oberseite (32) entgegengesetzte Unterseite (33) zum Bilden der zweiten Seite (3) aufweist, wobei die Scheibe (1) ferner einen insgesamt kreisförmigen Rand (4), der eine erste mechanische Positionierungsmarkierung bildet, und mindestens einen Rampenabschnitt (5), der eine zweite mechanische Positionierungsmarkierung bildet, umfasst, wobei der mindestens eine Rampenabschnitt (5) zwischen dem insgesamt kreisförmigen Rand (4) und der Oberseite (32) ausgebildet ist; wobei der Positionierungsring (10) eine insgesamt zylindrische Form aufweist und einen Hohlraum (13), der eine insgesamt kreisförmige Innenkontur (20) definiert, die eine erste ergänzende Kontrollmarkierung bildet, wobei die Innenkontur (20) konzentrisch zu dem Rand (4) der Scheibe (1) ist, und einen Absatz (21), der eine zweite ergänzende Kontrollmarkierung bildet, umfasst; wobei die Scheibe (1) dazu ausgestaltet ist, mindestens teilweise in den Hohlraum (13) des Rings (10) eingepasst zu werden, mit dem Rand (4) der Scheibe (1), der dazu ausgestaltet ist, mindestens teilweise in Kontakt mit der Innenkontur (20) des Rings (10) zu sein, und dem mindestens einen Rampenabschnitt (5) der Scheibe (1), der dazu ausgestaltet ist, ebenfalls in Kontakt mit dem Absatz (21) des Rings (10) zu sein;
**dadurch gekennzeichnet, dass** die Scheibe (1) eine kreisförmige Fase (5) umfasst, die den Rampenabschnitt bildet, wobei die kreisförmige Fase (5) eine Neigung zwischen ungefähr 20° und ungefähr 45° aufweist, und der Ring (10) eine Kante (22) umfasst, die durch den Absatz (21) definiert wird, mit der kreisförmigen Fase (5), die an der Kante (22) anliegt, wenn die Scheibe (1) teilweise in den Ring (10) eingepasst ist.

11. Anordnung nach Anspruch 10, **dadurch gekennzeichnet, dass** die Scheibe (1) ferner eine dritte mechanische Positionierungsmarkierung (6) an dem insgesamt kreisförmigen Rand (4) umfasst, beispielsweise eine Abflachung, und der Positionierungsring (10) eine dritte ergänzende Kontrollmarkierung (18, 19) an der Innenkontur (20) umfasst, beispielsweise einen geraden Abschnitt, mit der dritten mechanischen Positionierungsmarkierung (6) und der dritten mechanischen Kontrollmarkierung (18, 19), die dazu ausgestaltet sind, die Scheibe (1) um eine Achse (Tz), welche die Oberseite (32) und Unterseite (33) der Scheibe durchdringt (1), in Bezug auf den Ring (10) gegen Verdrehen zu sichern, wenn die Scheibe (1) teilweise auf dem Ring (10) eingepasst ist.

12. Anordnung nach Anspruch 11, **dadurch gekennzeichnet, dass** die dritte mechanische Positionierungsmarkierung (6) parallel zu einer nasal-temporalen Achse der Scheibe (1) zum Bilden der optischen Linse ausgebildet ist.

13. Anordnung nach einem der Ansprüche 10 bis 12, **dadurch gekennzeichnet, dass** der Positionierungsring (10) ferner eine Einspritzkerbe (25) umfasst, die in den Hohlraum (13) mündet, und die Anordnung ferner einen Sicherungs- und Haltestift (30) umfasst, auf dem die Scheibe (1) dazu ausgestaltet ist, in der Position dank eines bindenden Materials gesichert zu werden, das durch die Einspritzkerbe (25) hindurch eingespritzt wird, wobei der Positionierungsring (10) daraufhin zwischen der Scheibe (1) und dem Sicherungs- und Haltestift (30) angeordnet ist.

14. Anordnung nach einem der Ansprüche 10 bis 13, **dadurch gekennzeichnet, dass** der Ring (10) eine Mehrzahl von Führungsblöcken (16) umfasst, die regelmäßig um den Hohlraum (13) herum angeordnet sind und die Innenkontur (20) definieren.

15. Anordnung nach einem der Ansprüche 10 bis 14, **dadurch gekennzeichnet, dass** der mindestens eine Rampenabschnitt (5) der Scheibe (1) einen Neigungswinkel (α1, α2, α3) in Bezug auf den Rand (4) der Scheibe (1) aufweist, wobei der Neigungswinkel (α1, α2, α3) so bestimmt wird, dass der Kontakt zwischen der Scheibe (1) und dem Positionierungsring (10) in Abhängigkeit von mindestens einer vorbestimmten Spannung erhöht wird.

16. Anordnung nach Anspruch 15, **dadurch gekennzeichnet, dass** der Neigungswinkel (α1, α2, α3) des mindestens einen Rampenabschnitts (5) in Abhängigkeit von einem Merkmal bestimmt wird, das repräsentativ für einen Kontaktumfang zwischen dem mindestens einen Rampenabschnitt (5) der Scheibe (1) und dem Absatz (21) des Rings (10) ist, um die Stabilität der Scheibe (1) in dem Ring (10) zu gewährleisten.

17. Anordnung nach einem der Ansprüche 15 und 16, **dadurch gekennzeichnet, dass** der Neigungswinkel (α1, α2, α3) des mindestens einen Rampenabschnitts (5) in Abhängigkeit von einem Merkmal bestimmt wird, das repräsentativ für einen optisch nützlichen Bereich der optischen Linse ist, um eine vorbestimmte Öffnungsweite der optischen Linse zu gewährleisten.

## Claims

1. Process for manufacturing an optical lens having a first face (2) and a second face (3) opposite said first face (2), comprising a step of positioning said second face (3) relative to said first face (2) for the machining of said second face (3), which positioning step comprises steps of:
- providing (131) a lens blank (1) for forming said optical lens, which lens blank (1) has an upper face (32) for forming said first face (2), a lower face (33), opposite said upper face (32), for forming said second face (3), and at least one positioning guide;
- providing (133) a positioning ring (10) having at least one control guide;
- mounting (134) said lens blank (1) on said positioning ring (10);
- positionally blocking (135) said lens blank (1) on a blocking and holding pin (30), said positioning ring (10) then being interposed between said lens blank (1) and said blocking and holding pin (30);
said lens blank (1) comprising a generally circular edge face (4) forming a first mechanical positioning guide and at least one sloped portion (5) forming a second mechanical positioning guide, said at least one sloped portion (5) being located between said generally circular edge face (4) and said upper face (32), said positioning ring (10) having a generally cylindrical shape and comprising a cavity (13) defining a generally circular internal outline (20) forming a first complementary control guide, which internal outline (20) is concentric with said edge face (4) of said lens blank (1), and a shoulder (21) forming a second complementary control guide; and
said step of providing (131) said lens blank (1) comprising steps of:
- edging (121) at least partially the outline of said lens blank (1) in order to form said generally circular edge face (4) and thus form said first mechanical positioning guide of said lens blank (1);
- **characterized by** the step of chamfering (122) at least partially one portion of said lens blank (1), which portion is located between said generally circular edge face (4) and said convex face (32), in order to form said at least one sloped portion (5) and thus form said second mechanical positioning guide of said lens blank (1); and said step (134) of mounting said lens blank (1) on said ring (10) comprises the step of at least partially lodging said lens blank (1) in said cavity (13) of said ring (10), with said edge face (4) of said lens blank (1) which is at least partially in contact with said internal outline (20) of said ring (10) and said at least one sloped portion (5) of said lens blank (1) which is also in contact with a ridge defined by said shoulder (21) of said ring (10).

2. Process according to Claim 1, **characterized in that** said lens blank (1) furthermore comprises a third mechanical positioning guide (6) in said generally circular edge face (4), a flat for example, and said positioning ring (10) comprises a third complementary control guide (18, 19) in said internal outline (20), for example a right portion, said third mechanical positioning guide (6) and said third mechanical control guide (18, 19) being configured to immobilize rotationally said lens blank (1) about an axis (Tz) passing through said upper (32) and lower (33) faces of said lens blank (1), relative to said ring (10), when said lens blank (1) is mounted on said ring (10).

3. Process according to Claim 1, **characterized in that** said lens blank (1) furthermore comprises a third mechanical or visual positioning guide (6) in said generally circular edge face (4) or at the periphery of said upper face (32); and said process furthermore comprises a step (136) of visually or mechanically controlling the angular position of said lens blank (1) relative to said ring (10), which angular position is measured relative to an axis (Tz) passing through said upper (32) and lower (33) faces of said lens blank (1), when said lens blank (1) is mounted on said ring (10); and a step of determining a possible angular position error.

4. Process according to any one of Claims 1 to 3, **characterized in that** it furthermore comprises the step of machining (137) said lower face (33) of said lens blank (1) in order to form said second face (3) of said optical lens.

5. Process according to Claim 4, **characterized in that** it furthermore comprises steps of:
- trimming (139) said lens blank (1) to a preset diameter;
- polishing (140) said previously machined second face (3); and
- engraving (141) said previously machined second face (3).

6. Process according to any one of Claims 1 to 5, **characterized in that** it furthermore comprises the step of coating (132) said upper face (32) of said lens blank (1) before said step of mounting said lens blank (1) on said positioning ring (10).

7. Process according to any one of Claims 1 to 6, **characterized in that** said positioning ring (10) furthermore comprises an injection channel (25) opening onto said cavity (13) and said step (135) of positionally blocking said lens blank (1) on said blocking and holding pin (30) comprises the step of injecting a binding material (31), for example a metal, into said injection channel (25).

8. Process according to any one of Claims 1 to 7, **characterized in that** said step of providing (131) said lens blank (1) comprises the step of machining (123) a third mechanical positioning guide of said lens blank (1) into said outline of said lens blank (1).

9. Process according to any one of Claims 1 to 8, **characterized in that** said step of providing (131) said lens blank (1) furthermore comprises a step of machining (110) said upper face (32) of said lens blank (1) in order to form said upper face (2) of said optical lens.

10. Assembly comprising a lens blank (1) for forming an optical lens having a first face (2) and a second face (3) opposite said first face (2), and a positioning ring (10) on which said lens blank (1) is mounted, which lens blank (1) has an upper face (32) for forming said first face (2) and a lower face (33), opposite said upper face (32), for forming said second face (3), said lens blank (1) furthermore comprising a generally circular edge face (4) forming a first mechanical positioning guide and at least one sloped portion (5) forming a second mechanical positioning guide, said at least one sloped portion (5) being located between said generally circular edge face (4) and said upper face (32), said positioning ring (10) having a generally cylindrical shape and comprising a cavity (13) defining a generally circular internal outline (20) forming a first complementary control guide, which internal outline (20) is concentric with said edge face (4) of said lens blank (1), and a shoulder (21) forming a second complementary control guide, said lens blank (1) being configured to be at least partially lodged in said cavity (13) of said ring (10), said edge face (4) of said lens blank (1) being configured to at least partially make contact with said internal outline (20) of said ring (10) and said at least one sloped portion (5) of said lens blank (1) being configured to also make contact with said shoulder (21) of said ring (10); **characterized in that** said lens blank (1) comprises a circular chamfer (5) forming said sloped portion, which circular chamfer (5) has a slope comprised between about 20° and about 45°, and said ring (10) comprises a ridge (22) defined by said shoulder (21), said circular chamfer (5) bearing against said ridge (22) when said lens blank (1) is partially lodged in said ring (10).

11. Assembly according to Claim 10, **characterized in that** said lens blank (1) furthermore comprises a third mechanical positioning guide (6) in said generally circular edge face (4), a flat for example, and said positioning ring (10) comprises a third complementary control guide (18, 19) in said internal outline (20), for example a right portion, said third mechanical positioning guide (6) and said third mechanical control guide (18, 19) being configured to immobilize rotationally said lens blank (1) about an axis (Tz) passing through said upper (32) and lower (33) faces of said lens blank (1), relative to said ring (10), when said lens blank (1) is partially lodged on said ring (10) .

12. Assembly according to Claim 11, **characterized in that** said third mechanical positioning guide (6) is located parallel to a nasal-temporal axis of said lens blank (1) for forming said optical lens.

13. Assembly according to any one of Claims 10 to 12, **characterized in that** said positioning ring (10) furthermore comprises an injection channel (25) opening onto said cavity (13) and said assembly furthermore comprises a blocking and holding pin (30) on which said lens blank (1) is configured to be positionally blocked by virtue of a binding material injected through said injection channel (25), said positioning ring (10) then being interposed between said lens blank (1) and said blocking and holding pin (30).

14. Assembly according to any one of Claims 10 to 13, **characterized in that** said ring (10) comprises a plurality of guiding blocks (16) regularly distributed around said cavity (13) and defining said internal outline (20).

15. Assembly according to any one of Claims 10 to 14, **characterized in that** said at least one sloped portion (5) of said lens blank (1) has an angle of inclination (α₁, α₂, α₃) relative to said edge face (4) of said lens blank (1), which angle of inclination (α₁, α₂, α₃) is set so as to increase contact between said lens blank (1) and said positioning ring (10) depending on at least one preset constraint.

16. Assembly according to Claim 15, **characterized in that** said angle of inclination (α₁, α₂, α₃) of said at least one sloped portion (5) is set depending on a characteristic representative of a perimeter of contact between said at least one sloped portion (5) of said lens blank (1) and said shoulder (21) of said ring (10) in order to ensure the stability of said lens blank (1) in said ring (10).

17. Assembly according to one of Claims 15 and 16, **characterized in that** said angle of inclination (α₁, α₂, α₃) of said at least one sloped portion (5) is set depending on a characteristic representative of an optically useful zone of said optical lens in order to ensure a preset aperture for said optical lens.
